# EUROPÄISCHE PATENTSCHRIFT

(11) **EP 0 858 943 B1**
(45) Veröffentlichungstag und Bekanntmachung des Hinweises auf die Patenterteilung: **06.06.2001**
(21) Anmeldenummer: 98101789.0
(22) Anmeldetag: 03.02.1998
(51) Int. Cl.: B62D 25/08, B62D 25/14

(54) **Kraftfahrzeug mit einer Abstützung zwischen Querträger und Spritzschutzwand**
Motor vehicle with a connecting structure between a cross member and a firewall
Véhicule automobile avec une structure de support entre une barre transversale et la cloison pare-feu

(30) Priorität: 18.02.1997 DE 19706225
(43) Veröffentlichungstag der Anmeldung: 19.08.1998
(73) Patentinhaber: Progress-Werk Oberkirch Aktiengesellschaft, 77704 Oberkirch (DE)
(72) Erfinder: Schmieder, Hansjörg, 77704 Oberkirch-Zusenhofen (DE)
(74) Vertreter: Weller, Wolfgang, Dr.rer.nat.

(56) Entgegenhaltungen:
- EP-A- 0 055 398
- US-A- 3 376 947
- PATENT ABSTRACTS OF JAPAN vol. 008, no. 267 (M-343), 7.Dezember 1984 & JP 59 140183 A (HINO JIDOSHA KOGYO KK), 11.August 1984,

## Beschreibung

Die Erfindung betrifft ein Kraftfahrzeug, mit einer unterhalb der Windschutzscheibe angeordneten Spritzschutzwand und mit einem Querträger, der vor der Spritzschutzwand zwischen den A-Säulen im wesentlichen horizontal verlaufend angeordnet ist, sowie mit einer Abstützung zwischen dem Querträger und der Spritzschutzwand, über die der Querträger bei einem Aufprall gegen ein Einknicken abgestützt ist.

Ein derartiges Kraftfahrzeug ist allgemein bekannt. Der Querträger und die beiden A-Säulen sind Komponenten der Karosserie des Kraftfahrzeuges im Bereich der Windschutzscheibe. Der Querträger ist zwischen den beiden A-Säulen angeordnet und an diesen seitlich über an dem Querträger vorgesehene Halterungen befestigt. Unter den A-Säulen versteht man die sich vom Dach des Kraftfahrzeuges etwa bis zum Boden der Karosserie im wesentlichen vertikal erstreckenden beiden Träger, zwischen deren oberen Abschnitten die Windschutzscheibe seitlich eingefaßt ist, und an deren unteren Abschnitten unter anderem die Vordertüren des Kraftfahrzeuges montiert sind.

Der Querträger ist in einem bestimmten Abstand von einigen Zentimetern vor der Spritzschutzwand angeordnet. Die Spritzschutzwand, die unterhalb der Windschutzscheibe angeordnet ist, bildet eine Trennwand zwischen dem Motorraum und dem Fahrgastraum des Kraftfahrzeuges.

An dem Querträger sind mehrere verschiedene Aufnahmeelemente entweder angeschweißt, angeschraubt oder auf sonstige Weise befestigt. Bei diesen Aufnahmeelementen handelt es sich unter anderem um Halterungen für die Instrumententafel, für die Mittelkonsole, für die Lenksäule, die den Fahrerairbag trägt, und für den Beifahrerairbag.

Ein besonders wichtiges Element des eingangs genannten Kraftfahrzeuges ist die Abstützung zwischen dem Querträger und der Spritzschutzwand des Kraftfahrzeuges. Diese Abstützung soll verhindern, daß der Querträger bei einem Crash, genauer gesagt bei einem Aufprall des Fahrzeuges in Fahrtrichtung, bspw. bei einem Frontalzusammenstoß, in Richtung zur Spritzschutzwand einknickt. Ein Einknicken des Querträgers insbesondere im Bereich der Halterung für den Fahrer- bzw. Beifahrerairbag muß bei einem Aufprall jedoch aus Sicherheitsgründen unbedingt vermieden werden, da diese Halterungen beim Einknicken des Querträgers aus ihrer vorgegebenen Lage gebracht werden könnten und der Airbag bzw. die Airbags sich dann in einer von der Sollrichtung abweichenden Richtung öffnen würden. Durch das Vorsehen der Abstützung zwischen dem Querträger und der Spritzschutzwand wird das Einknicken des Querträgers bei einem Unfall verhindert, so daß die Halterungen für die Airbags ihre vorgegebene Lage beibehalten und die Airbags sich lagerichtig öffnen.

Bei dem eingangs genannten allgemein bekannten Kraftfahrzeug besteht die Abstützung aus einem an dem Querträger im Bereich der Fahrerseite oder der Beifahrerseite angeschweißten oder angeschraubten massiven Winkelprofil, dessen freier Schenkel an der Spritzschutzwand befestigt wird. Dazu ist in dem freien Schenkel des Winkelprofils eine topfförmige Öffnung, ein sogenannter Gluepot, vorgesehen, in die ein aushärtender Klebstoff, bspw. ein Harz, eingefüllt wird, und in den dann ein durch die Spritzschutzwand durchgehender Haltebolzen eingesetzt wird, der nach dem Aushärten des Klebstoffes fest mit dem Winkelprofil verbunden ist, oder das Wineklprofil wird fest verschraubt.

Bei dieser bekannten Art einer Abstützung ist der Querträger demnach nach der Montage im Bereich der Abstützung fest mit der Spritzschutzwand verbunden.

Diese Art einer Abstützung ist jedoch nachteilig, wenn bspw. die Instrumententafel in dem Kraftfahrzeug ausgewechselt werden muß. Bei den heutigen Kraftfahrzeugen ist es aus Kostengründen üblich, bei einem Defekt eines Instrumentes der Instrumententafel die Baueinheit aus Querträger und Instrumententafel als Ganzes auszutauschen, anstatt nur das defekte Instrument einzeln auszuwechseln. Bei der bekannten Ausgestaltung der Abstützung ist jedoch die Demontage des Querträgers zusammen mit der Instrumententafel mit einem beträchtlichen Arbeitsaufwand verbunden und erfordert den Einsatz spezieller Werkzeuge, weil ggf. die Klebverbindung zwischen der an dem Querträger festgelegten Abstützung und der Spritzschutzwand gelöst werden muß, wenn die Abstützung an dem Querträger nicht angeschraubt, sondern angeschweißt ist.

Ein noch schwerwiegenderer Nachteil ergibt sich bei der Montage der Austauschbaueinheit aus Querträger und Instrumententafel. Die Fertigungstoleranzen der Querträger mit Instrumententafel betragen in der Regel einige Millimeter. Diese Toleranzen führen dazu, daß beim Montieren des Austauschquerträgers die Position der an dem Querträger zuvor befestigten Abstützung nicht mehr mit derjenigen Position, an der der Haltebolzen durch die Spritzschutzwand geführt ist, übereinstimmt, sondern entsprechend der Toleranz von dieser Position erheblich abweichen kann. Dies führt dazu, daß die Abstützung dann nicht mehr an der Spritzschutzwand befestigt werden kann. Eine Befestigung ist jedoch bei dieser bekannten Art: der Abstützung erforderlich, da es ansonsten aufgrund von Vibrationen zu unerwünschten Geräuschen kommt, die den Fahrkomfort wesentlich beeinträchtigen. Die Fertigungstoleranzen sind auch der Grund, warum bei den bekannten Kraftfahrzeugen als Verbindung zwischen der Abstützung und der Spritzschutzwand die Gluepots vorgesehen sind, da eine Schraubverbindung wegen der Toleranzen der Bauteile zu aufwendigen Haltern führt. Es könnte zur Lösung des Problems zwar in Betracht gezogen werden, den Fertigungstoleranzen durch eine entsprechende Vergrößerung der Gluepots Rechnung zu tragen, jedoch wird dies nicht als zufriedenstellend angesehen. In Dokument US-A-3 376 947 wird ebenfalls auf den Einfluß von Toleranzen beim Einbau einer Instrumententafel eingegangen.

Der Erfindung liegt demnach die Aufgabe zugrunde, das Kraftfahrzeug der eingangs genannten Art dahingehend weiterzubilden, daß die zuvor genannten Nachteile vermieden werden, und daß eine von den Fertigungstoleranzen unabhängige leichte Montage und Demontage des Querträgers ermöglicht wird, wobei gleichzeitig eine sichere Abstützung des Querträgers an der Spritzschutzwand im Falle eines Aufpralles gewährleistet ist.

Erfindungsgemäß wird die Aufgabe hinsichtlich des eingangs genannten Kraftfahrzeuges dadurch gelöst, daß die Abstützung derart ausgebildet ist, daß der Querträger und die Spritzschutzwand im montierten Zustand im Bereich der Abstützung nicht miteinander in Verbindung stehen und in einem Abstand von einigen Millimetern angeordnet sind.

Dadurch, daß bei dem erfindungsgemäßen Kraftfahrzeug die Abstützung derart ausgebildet ist, daß der Querträger und die Spritzschutzwand im montierten Zustand im Bereich der Abstützung nicht miteinander in Verbindung stehen, wird eine im montierten Zustand berührungslose Abstützung geschaffen. Eine derartige berührungslose Abstützung hat den Vorteil, daß sich der Querträger besonders leicht demontieren läßt, da keine Verbindung mit der Spritzschutzwand wie im Stand der Technik gelöst werden muß. Die Gluepots gemäß dem Stand der Technik sind bei der erfindungsgemäßen berührungslosen Abstützung nicht erforderlich. Darüber hinaus ermöglicht die berührungslose Abstützung eine leichte Montage, und auch größere Toleranzen der Einheit aus Querträger und Instrumententafel bereiten bei dem erfindungsgemäßen Kraftfahrzeug keine Schwierigkeiten, weil die Position der Abstützung nicht exakt an die Position einer Befestigungsstelle an der Spritzschutzwand angepaßt sein muß. Die Toleranzen können daher bei der Montage vernachlässigt werden. Mit der erfindungsgemäßen berührungslosen Abstützung wird andererseits bei einem Aufprall des Kraftfahrzeuges ein Einknicken des Querträgers noch sicher vermieden, weil der Querträger maximal um den Abstand von einigen Millimetern zu der Spritzschutzwand hin ausgelenkt werden kann und dann von der Abstützung sicher gegen die Spritzschutzwand abgestützt wird. Diese geringfügige Auslenkung des Querträgers beeinflußt bei einem Unfall nicht die Betriebssicherheit des bzw. der Airbags. Vielmehr befinden sich diese beim Wirksamwerden der Abstützung noch in ihrer vorbestimmten Lage und Ausrichtung. Durch den Abstand von einigen Millimetern wird außerdem auf vorteilhafte Weise verhindert, daß die berührungslos gegenüberliegenden Komponenten des Querträgers, der Spritzschutzwand und der Abstützung durch Schwingungen der Karosserie beim Fahren aneinanderschlagen, wodurch unerwünschte Geräusche vermieden werden. Auf diese Weise ist durch die erfindungsgemäße berührungslose Abstützung der Fahrkomfort des erfindungsgemäßen Kraftfahrzeuges in keiner Weise beeinträchtigt.

Die Aufgabe wird somit vollkommen gelöst.

In einer bevorzugten Ausgestaltung des erfindungsgemäßen Kraftfahrzeuges beträgt der Abstand etwa 3 bis 15 mm, vorzugsweise 5 bis 10 mm.

Dieser Abstandsbereich ist besonders vorteilhaft, da bei dieser Wahl des Abstandes noch eine sichere Abstützwirkung erzielt wird, ohne daß der Querträger aus seiner ursprünglichen Lage bei einem Aufprall so weit ausgelenkt wird, daß es zu einer Einknickung kommt. Andererseits wird mit diesen Abständen sicher vermieden, daß es aufgrund von Schwingungen im Resonanzbereich der Karosserie zu einer Berührung der sich gegenüberstehenden Komponenten aus Querträger, Spritzschutzwand bzw. Abstützung kommt.

In einer weiter bevorzugten Ausgestaltung wird die Abstützung aus einem Abstützelement gebildet, das an der Spritzschutzwand befestigt ist.

Diese Maßnahme hat den Vorteil, daß die Abstützung ein von dem Querträger und den daran befestigten Elementen und Halterungen unabhängiges Bauteil bildet. Bei einem Austausch des Querträgers kann die Abstützung an der Spritzschutzwand befestigt bleiben und muß beim Auswechseln des Querträgers nicht berücksichtigt werden.

Dabei ist es bevorzugt, wenn das Abstützelement ein Profil aufweist, das auf seiner dem Querträger zugewandten Seite an die Außenkontur des Querträgers angepaßt ist.

Diese Maßnahme ist besonders vorteilhaft, da der Querträger bei einem Aufprall von der Abstützung flächig und/oder formschlüssig abgestützt werden kann. Mit anderen Worten weist das Abstützelement ein Profil auf, das zu dem Profil des Querträgers etwa komplementär ist. Eine formschlüssige Abstützung hat darüber hinaus den Vorteil, daß auch ein Einknicken des Querträgers in einer Richtung quer zur Fahrtrichtung vermieden werden kann. Bei einem rohrförmigen Querträger mit einem runden Querschnitt bspw. weist die den Querträger abstützende Seite des Abstützelementes entsprechend eine komplementäre Rundung auf.

In einer weiteren bevorzugten Ausgestaltung sind an dem Querträger eine oder mehrere Laschen ausgebildet und weist das Abstützelement entsprechende Fortsätze auf, die bei einer Auslenkung des Querträgers in die Laschen eingreifen.

Diese Maßnahme hat den Vorteil, daß bei entsprechender Anordnung der Laschen an dem Querträger auch ein Ausweichen und Einknicken des Querträgers in einer zur Fahrtrichtung senkrechten Richtung, d.h. nach oben oder unten, sicher vermieden werden kann, wodurch insbesondere im Hinblick auf die Halterungen für den oder die Airbags die Betriebssicherheit des Kraftfahrzeuges weiter erhöht wird.

In einer alternativen bevorzugten Ausgestaltung wird die Abstützung aus einem Abstützelement gebildet, das an dem Querträger befestigt ist.

Diese Maßnahme ist dann vorteilhaft, wenn es bspw. aus Fertigungsgründen gewünscht ist, die Abstützung in Einheit mit dem Querträger auszubilden.

Bei einem weiteren bevorzugten Ausführungsbeispiel wird die Abstützung aus zwei Elementen gebildet, wobei das erste Element als Topf ausgebildet ist, und wobei das zweite Element derart ausgebildet ist, daß es sich in dem Topf abstützen kann.

Bei diesem Ausführungsbeispiel wird eine besonders vorteilhafte berührungslose Abstützung des Querträgers an der Spritzschutzwand erzielt. Bei entsprechender Ausbildung des zweiten Abstützelementes, das sich in dem als Topf ausgebildeten ersten Abstützelement abstützen kann, kann eine formschlüssige Abstützung erzielt werden, die nicht nur ein Einknicken des Querträgers in einer Richtung parallel zur Fahrtrichtung, sondern auch in allen Richtungen quer zur Fahrtrichtung vermeidet. Das sich in dem Topf abstützende zweite Abstützelement ist vorzugsweise so ausgestaltet, daß unabhängig von den Fertigungstoleranzen des Querträgers eine wirksame Abstützung erreicht wird.

Dabei ist es bevorzugt, wenn das erste Abstützelement an dem Querträger und das zweite Abstützelement an der Spritzschutzwand befestigt ist.

Ebenso könnte auch eine umgekehrte Anordnung der beiden Abstützelemente in Betracht gezogen werden.

Weiterhin ist es dabei bevorzugt, wenn das erste Abstützelement und das zweite Abstützelement kegelstumpfförmig ausgebildet sind.

Durch diese Maßnahme wird der Vorteil erzielt, daß bereits nach einem geringfügigen Eintauchen des zweiten Abstützelementes in das als Topf ausgebildete erste Abstützelement die Abstützwirkung eintritt, indem das zweite Abstützelement sich an der konisch verlaufenden Innenwand des ersten Abstützelementes abstützt. Darüber hinaus gewährleistet die kegelstumpfförmige Ausgestaltung der Abstützelemente eine von den Fertigungstoleranzen unabhängige Montage.

Bei einem weiteren bevorzugten Ausführungsbeispiel wird die Abstützung aus zwei Abstützelementen gebildet, wobei das erste Abstützelement einen Flanschabschnitt aufweist, und wobei das zweite Abstützelement den Flanschabschnitt gehäuseartig allseitig berührungslos umgibt.

Dieses Ausführungsbeispiel stellt eine vorteilhafte Ausgestaltung der erfindungsgemäßen berührungslosen Abstützung dar, bei dem der Vorteil erzielt wird, daß der Querträger nicht nur gegen ein Einknicken in Richtung zu der Spritzschutzwand hin abgestützt wird, bspw. bei einem Frontalzusammenstoß, sondern auch gegen ein Einknicken von der Spritzschutzwand weg. Ein solches Einknicken von der Spritzschutzwand weg kann bspw. auftreten, wenn auf das Kraftfahrzeug ein anderes Fahrzeug von hinten auffährt. Durch die allseitige gehäuseartige Einfassung des Flanschabschnittes ist eine Auslenkung des Querträgers von der Spritzschutzwand weg ebenso begrenzt wie eine Auslenkung zu der Spritzschutzwand hin. Darüber hinaus sind durch die allseitige gehäuseartige Einfassung selbstverständlich auch Auslenkungen des Querträgers quer zur Fahrtrichtung begrenzt, so daß insgesamt ein Einknicken des Querträgers in allen Raumrichtungen vermieden wird. Dadurch wird die Halterung für den Airbag bei jedem Unfall in seiner ursprünglichen vorbestimmten Position gehalten.

Dabei ist es bevorzugt, wenn das erste Abstützelement an der Spritzschutzwand und das zweite Abstützelement an dem Querträger befestigt ist.

Bei dieser Verteilung der Abstützelemente auf dem Querträger und der Spritzschutzwand wird der Vorteil erzielt, daß die Montage eines Austauschquerträgers leicht durchzuführen ist, da zunächst der Querträger mit dem daran befestigten zweiten gehäuseartigen Abstützelement zwischen den A-Säulen befestigt und danach der Flanschabschnitt des ersten Abstützelementes in das gehäuseartige zweite Abstützelement eingesetzt und das zweite Abstützelement dann an der Spritzschutzwand befestigt werden kann.

Weitere Vorteile ergeben sich aus der nachfolgenden Beschreibung der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung werden hiernach mit Bezug auf die beigefügte Zeichnung beschrieben. Es zeigen:
- Fig. 1: eine schematische Teilansicht eines Kraftfahrzeuges im Bereich der Windschutzscheibe mit einer Abstützung für den Querträger;
- Fig. 2: einen Querschnitt entlang der Linie II-II in Fig. 1 in gegenüber Fig. 1 vergrößertem Maßstab;
- Fig. 3: einen der Fig. 2 entsprechenden Querschnitt eines zweiten Ausführungsbeispiels der Erfindung;
- Fig. 4: einen der Fig. 2 entsprechenden Querschnitt eines dritten Ausführungsbeispiels der Erfindung;
- Fig. 5: einen der Fig. 2 entsprechenden Querschnitt eines vierten Ausführungsbeispiels der Erfindung; und
- Fig. 6: einen der Fig. 2 entsprechenden Querschnitt eines fünften Ausführungsbeispiels der Erfindung.

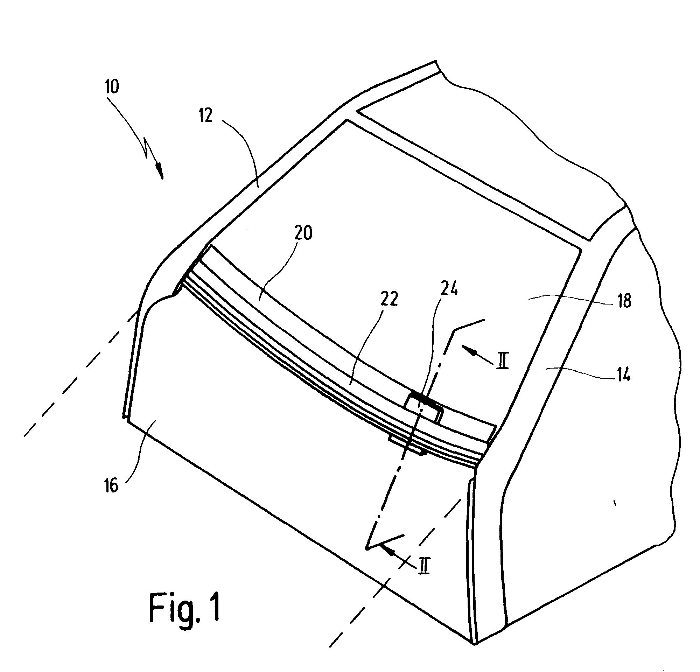

In Fig. 1 ist ein mit dem allgemeinen Bezugszeichen 10 bezeichnetes Kraftfahrzeug schematisch ausschnittsweise dargestellt. Der in Fig. 1 dargestellte Ausschnitt des Kraftfahrzeuges 10 bezieht sich auf das vordere Ende der Fahrgastzelle des Kraftfahrzeuges 10. In diesem Bereich weist die Karosserie des Kraftfahrzeuges 10 die rechte A-Säule 12 und die linke A-Säule 14 auf. Die A-Säulen 12 und 14 bilden die beiden vorderen vertikal verlaufenden Träger des Tragrahmens der Karosserie des Kraftfahrzeuges 10.

Weiterhin weist das Kraftfahrzeug 10 eine Spritzschutzwand 16 auf, die unterhalb der Windschutzscheibe 18 angeordnet ist. Die Spritzschutzwand 16 trennt den vor der Spritzschutzwand 16 liegenden Motorraum von dem hinter der Spritzschutzwand 16 liegenden Fahrgastraum. Die Spritzschutzwand 16 erstreckt sich vom Boden der Karosserie bis zu einem oberen Ende 20, an das sich darüber die Windschutzscheibe 18 anschließt.

Vor der Spritzschutzwand 16 ist ein Querträger 22 zwischen den A-Säulen 12 und 14 horizontal verlaufend angeordnet. Der Querträger 22 ist seitlich an den A-Säulen 12 und 14 befestigt. Der Querträger 22 befindet sich in einem Abstand von wenigen Zentimetern vor der Spritzschutzwand 16, und steht mit dieser nicht in Verbindung.

Der Querträger 22 weist in Fig. 1 die Form eines Rohres auf, jedoch kann der Querträger 22 auch ein rechteckiges oder schalenförmiges Profil aufweisen.

Weiterhin ist über einen Teilabschnitt der Länge des Querträgers zwischen dem Querträger 22 und der Spritzschutzwand 16 eine Abstützung 24 vorgesehen, die hier schematisch dargestellt ist. Die Abstützung 24 zwischen dem Querträger 22 und der Spritzschutzwand 16 ist berührungslos, d.h. im montierten Zustand sind der Querträger 22 und die Spritzschutzwand 16 auch im Bereich der Abstützung 24 nicht miteinander verbunden, sondern weisen einen Abstand von wenigen Millimetern zueinander auf. Erst bei einem Aufprall des Kraftfahrzeuges 10 wird die Abstützung 24 in der Weise wirksam, daß sich der Querträger 22 über die Abstützung 24 gegen die Spritzschutzwand 16 abstützt, wodurch verhindert wird, daß der Querträger 22 im Bereich der Abstützung 24 einknickt. In Fig. 1 ist die Abstützung 24 auf der Fahrerseite angeordnet, und zwar in dem Bereich, in dem die in Fig. 1 nicht dargestellten Halterungen für den Fahrerairbag an dem Querträger 22 befestigt sind. Durch die Abstützung 24 wird bei einem Aufprall somit vermieden, daß der Querträger 22 im Bereich des Fahrerairbags einknickt und dadurch die Halterungen für den Airbag derart aus ihrer Position gebracht werden, daß sich der Airbag nicht mehr lagerichtig öffnet.

Obwohl dies in Fig. 1 nicht dargestellt ist, kann auf der Beifahrerseite ebenfalls eine Abstützung vorgesehen sein, die ähnlich zu oder identisch mit der Abstützung 24 ausgestaltet ist.

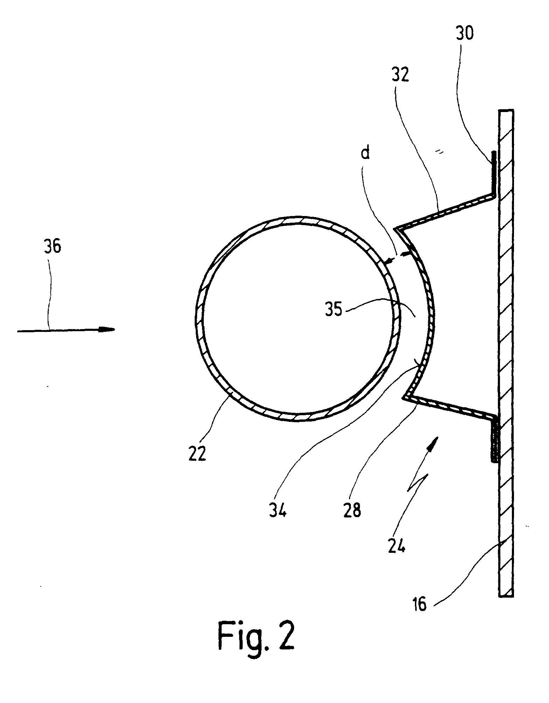

Die Ausgestaltung der Abstützung 24 wird nun mit Bezug auf Fig. 2 näher erläutert.

Die Abstützung 24 wird aus einem Abstützelement 28 gebildet, das über Fußabschnitte 30 an der Spritzschutzwand 16 befestigt ist. Das Abstützelement 28 kann dabei entweder an der Spritzschutzwand 16 angeschweißt oder angeschraubt sein.

Insgesamt weist das Abstützelement 28 die Form eines Kastenprofiles auf, bei dem ein umfänglicher Abschnitt 32 trapez-bzw. kegelförmig ausgebildet ist. Eine dem Querträger 22 zugewandte Seite 34 des Abstützelementes 28, die die Abstützfläche bildet, ist an die Außenkontur des Querträgers 22 angepaßt. In Fig. 2 ist die Seite 34 des Abstützelementes 28 konkav ausgebildet und weist die Form eines Teilzylindermantels auf.

Im in Fig. 2 dargestellten montierten Zustand des Querträgers 22 ist der Querträger 22 in einem Abstand d von dem Abstützelement 28 angeordnet, der etwa 5 bis 10 mm beträgt. Mit anderen Worten sind der Querträger 22 und die Spritzschutzwand 16 im montierten Zustand nicht miteinander verbunden, sondern es bleibt ein Spalt 35 zwischen dem Querträger 22 und der Abstützung 24 frei. Im montierten Zustand ist der Querträger 22 somit berührungslos abgestützt.

Bei einem Aufprall des Kraftfahrzeuges 10, bspw. bei einem Frontalzusammenstoß mit einem anderen Kraftfahrzeug, wirken auf den Querträger 22 Deformationskräfte in Richtung eines Pfeiles 36. Durch die Deformationskräfte wird der Querträger 22 in Richtung des Pfeiles 36 gegen die als Abstützfläche ausgebildete Seite 34 des Abstützelementes 28 ausgelenkt, wobei dann der Querträger 22 an der an die Außenkontur des Querträgers 22 angepaßten Seite 34 flächig und formschlüssig von dem Abstützelement 28 abgestützt wird. Das Abstützelement 28 ist derart massiv ausgebildet, daß es im wesentlichen unverformbar ist, so daß eine weitere Auslenkung und somit ein Einknicken des Querträgers 22 vermieden wird. Die Abstützung 24 wird also bereits nach einer geringfügigen Auslenkung des Querträgers 22 um den Abstand d voll wirksam.

Im normalen Betrieb verhindert der Spalt 35, daß es aufgrund von Resonanzschwingungen der Kraftfahrzeugkarosserie und damit von Schwingungen des Querträgers 22 oder der Spritzschutzwand 16 zu einer unerwünschten Berührung zwischen dem Querträger 22 und dem Abstützelement 28 kommt.

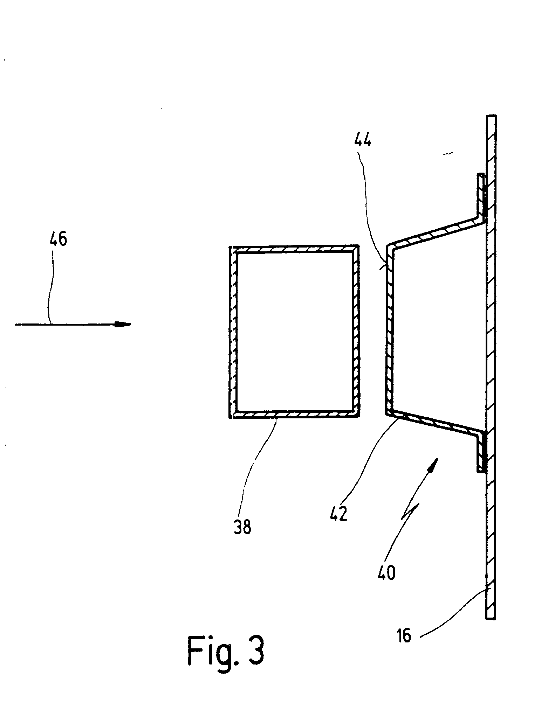

In Fig. 3 ist ein der Fig. 2 ähnliches Ausführungsbeispiel schematisch dargestellt, bei dem ein Querträger 38 ein Rechteckprofil aufweist. Eine Abstützung 40 wird aus einem Abstützelement 42 gebildet, dessen dem Querträger 38 zugewandte Seite 44 ebenflächig ausgebildet ist. Auch bei dieser Ausgestaltung stützt sich der Querträger 38 bei einer Auslenkung in Richtung eines Pfeiles 46 flächig gegen das Abstützelement 42 ab. Der Querträger 38 ist wiederum in einem Abstand von wenigen Millimetern von dem Abstützelement 42 angeordnet.

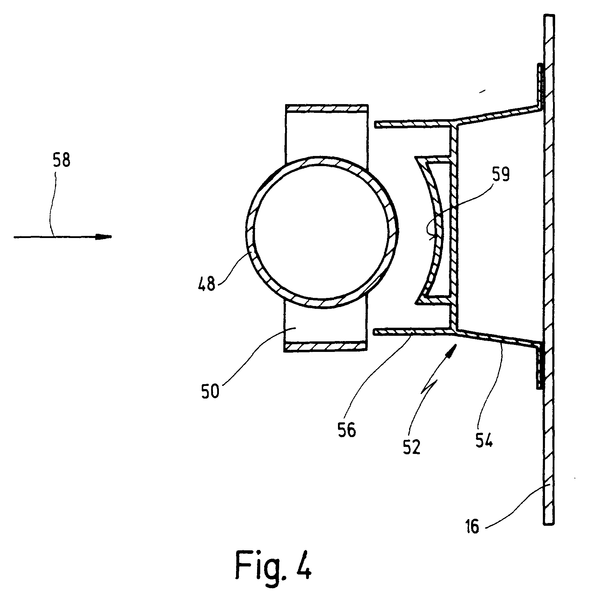

In Fig. 4 ist ein weiteres Ausführungsbeispiel dargestellt, bei dem ein im wesentlichen rohrförmiger Querträger 48 zwei Laschen 50 in Form eines C-Profils aufweist. Die Laschen 50 sind gegenüberliegend oben und unten an dem Querträger 48 befestigt.

Eine Abstützung 52 wird aus einem Abstützelement 54 gebildet, das an der Spritzschutzwand 16 befestigt ist. Das Abstützelement 54 weist Fortsätze 56 auf, die im montierten Zustand des Querträgers 48 außerhalb der Laschen 50 diesen benachbart angeordnet sind. Bei einer Auslenkung des Querträgers 48 in Richtung eines Pfeiles 58 fahren die Laschen 50 über die Fortsätze 56, die dann in die Laschen 50 eingreifen. Sobald die Fortsätze 56 in die Laschen 50 eingreifen, kann der Querträger 48 weder in Richtung des Pfeiles 58 noch in einer Richtung quer zu dem Pfeil 58 einknicken. Zusätzlich ist eine eine Abstützfläche bildende Seite 59 des Abstützelementes 54 an die Außenkontur des Querträgers 48 angepaßt, so daß sich der Querträger 48 flächig und formschlüssig gegen das Abstützelement 54 abstützen kann.

Im in Fig. 4 dargestellten montierten Zustand ist der Querträger 22 wiederum in einem Abstand von wenigen Millimetern von der Abstützfläche angeordnet.

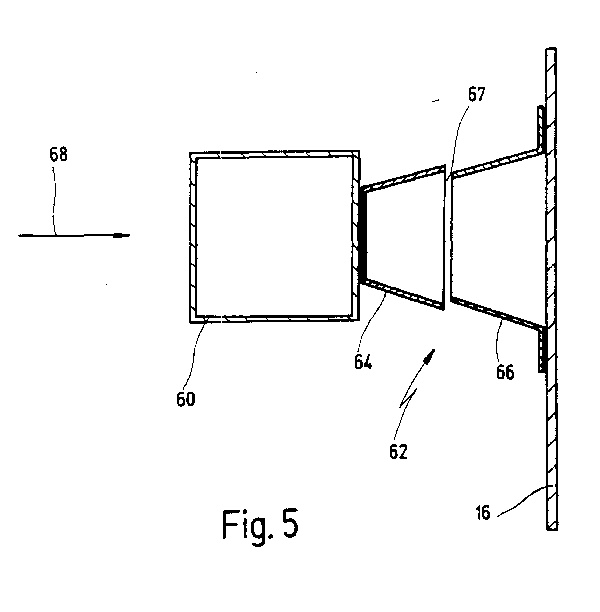

Bei dem in Fig. 5 dargestellten Ausführungsbeispiel weist das Kraftfahrzeug 10 einen Querträger 60 mit einem Rechteckprofil auf. Weiterhin ist eine Abstützung 62 vorgesehen, die aus einem ersten Abstützelement 64 und einem zweiten Abstützelement 66 gebildet wird. Das erste Abstützelement 64 ist an dem Querträger 60 befestigt und als kegelstumpfförmiger Topf ausgebildet.

Das zweite Abstützelement 66 ist an der Spritzschutzwand 16 befestigt und ist im in Fig. 5 dargestellten montierten Zustand einer offenen Seite 67 des ersten Abstützelementes 64 benachbart angeordnet. Im montierten Zustand ist somit auch die Abstützung 62 berührungslos. Das ebenfalls kegelstumpfförmig ausgebildete zweite Abstützelement 66 weist an seinem dem ersten Abstützelement benachbarten Ende einen Außendurchmesser auf, der etwas geringer als der Innendurchmesser der offenen Seite 67 des ersten Abstützelementes 64 ist.

Bei einer Auslenkung des Querträgers 60 in Richtung eines Pfeiles 68 fährt das topfförmige erste Abstützelement 64 über das zweite Abstützelement 66 und stützt sich auf dessen Außenwand ab, wobei sich ggf. zusätzlich die Außenwand des zweiten Abstützelementes 66 gegen die Innenwand des ersten Abstützelementes 64 abstützt. Fertigungstoleranzen des Querträgers 60 werden durch die kegelstumpfförmige Ausgestaltung des ersten Abstützelementes 64 und des zweiten Abstützelementes 66 kompensiert, so daß auch nach dem Austausch des Querträgers 60 durch einen neuen die Abstützung 62 in seiner Wirkung nicht beeinträchtigt wird.

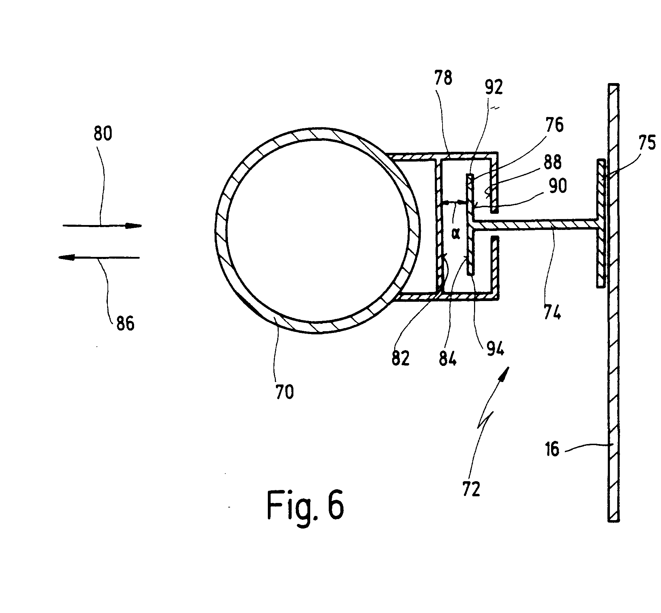

In Fig. 6 ist ein letztes Ausführungsbeispiel dargestellt, bei dem ein rohrförmiger Querträger 70 über eine Abstützung 72 berührungslos gegen die Spritzschutzwand 16 abgestützt ist. Die Abstützung 72 weist ein erstes Abstützelement 74 in Form eines Doppel-T-Profiles auf, das mit einem Fußflansch 75 an der Spritzschutzwand 16 durch Verschraubung oder auf sonstige Weise demontierbar befestigt ist. Das erste Abstützelement 74 weist an seinem freien Ende einen Flanschabschnitt 76 auf, der in einem zweiten gehäuseartigen Abstützelement 78 aufgenommen ist, das an dem Querträger 70 befestigt ist. Das zweite Abstützelement 78 umgibt den Flanschabschnitt 76 allseitig, wobei der Flanschabschnitt 76 in etwa mittig in dem zweiten Abstützelement 78 aufgenommen ist. Der Flanschabschnitt 76 weist mit anderen Worten allseitig von den Innenwänden des zweiten Abstützelementes 78 einen Abstand d auf, der wie bei den vorhergehenden Ausführungsbeispielen etwa 5 bis 10 mm beträgt.

Bei einer Auslenkung des Querträgers 70 in Richtung eines Pfeiles 80, d.h. bei einer Auslenkung des Querträgers 70 zu der Spritzschutzwand 16 hin, stützt sich eine Fläche 82 des zweiten Abstützelementes 78 gegen eine Abstützfläche 84 des Flanschabschnittes 76 ab, wodurch wie bei den vorherigen Ausführungsbeispielen ein Einknicken des Querträgers 70 in Richtung zu der Spritzschutzwand 16 hin vermieden wird.

Aber auch eine Auslenkung des Querträgers 70 in Richtung eines Pfeiles 86 ist dadurch begrenzt, daß sich bei einer derartigen Auslenkung eine Fläche 88 des zweiten Abstützelementes 78 gegen eine Abstützfläche 90 des Flanschabschnittes 76 abstützt. Dadurch wird bei einer auf den Querträger 70 in Richtung des Pfeiles 86 wirkenden Verformungskraft vermieden, daß der Querträger 70 in Richtung des Pfeiles 86 einknickt.

Wie aus Fig. 6 außerdem hervorgeht, ist auch eine Auslenkung des Querträgers quer zu den Richtungen 80 und 86 dadurch begrenzt, daß der Flanschabschnitt 76 auch an seinen freien Enden 92 und 94 von dem zweiten Abstützelement 78 umgeben ist.

Die Abstützung 72 verhindert somit ein Einknicken des Querträgers 70 in allen Raumrichtungen.

Bei allen in den Fig. 1 bis 6 dargestellten Ausführungsbeispielen ist eine Abstützung für den Querträger vorgesehen, die beim Auswechseln des Querträgers zusammen mit der daran befestigten Instrumententafeln ungeachtet etwaiger Toleranzen ein problemloses Einbauen und Ausbauen des Querträgers gestattet und trotzdem ein sicheres Abstützen des Querträgers gegen die Spritzschutzwand gewährleistet.

## Patentansprüche

1. Kraftfahrzeug, mit einer unterhalb der Windschutzscheibe (18) angeordneten Spritzschutzwand (16) und mit einem Querträger (22; 38; 48; 60; 70), der vor der Spritzschutzwand (16) zwischen den A-Säulen (12, 14) im wesentlichen horizontal verlaufend angeordnet ist, sowie mit einer Abstützung (24; 40; 52; 62; 72) zwischen dem Querträger (22; 38; 48; 60; 70) und der Spritzschutzwand (16), über die der Querträger (22; 38; 48; 60; 70) bei einem Aufprall gegen ein Einknicken abgestützt ist, dadurch gekennzeichnet, daß die Abstützung (24; 40; 52; 62; 72) derart ausgebildet ist, daß der Querträger (22; 38; 48; 60; 70) und die Spritzschutzwand (16) im montierten Zustand im Bereich der Abstützung (24; 40; 52; 62; 72) nicht miteinander in Verbindung stehen und in einem Abstand von einigen Millimetern angeordnet sind.

2. Kraftfahrzeug nach Anspruch 1, dadurch gekennzeichnet, daß der Abstand etwa 3 bis 15 mm, vorzugsweise 5 bis 10 mm beträgt.

3. Kraftfahrzeug nach Anspruch 1 oder 2, dadurch gekennzeichnet, daß die Abstützung (24; 40; 52) aus einem Abstützelement (28; 42; 54) gebildet wird, das an der Spritzschutzwand (16) befestigt ist.

4. Kraftfahrzeug nach Anspruch 3, dadurch gekennzeichnet, daß das Abstützelement (28; 42; 52) ein Profil aufweist, das auf seiner dem Querträger (22; 38; 48) zugewandten Seite (34; 44; 59) an die Außenkontur des Querträgers (22; 38; 48) angepaßt ist.

5. Kraftfahrzeug nach Anspruch 3 oder 4, dadurch gekennzeichnet, daß an dem Querträger (48) eine oder mehrere Laschen (50) ausgebildet sind, und daß das Abstützelement (54) entsprechende Fortsätze (56) aufweist, die bei einer Auslenkung des Querträgers (48) in die Laschen (50) eingreifen.

6. Kraftfahrzeug nach Anspruch 1 oder 2, dadurch gekennzeichnet, daß die Abstützung aus einem Abstützelement gebildet wird, das an dem Querträger befestigt ist.

7. Kraftfahrzeug nach Anspruch 1 oder 2, dadurch gekennzeichnet, daß die Abstützung (62) aus zwei Abstützelementen (64, 66) gebildet wird, wobei das erste Abstützelement (64) als Topf ausgebildet ist, und wobei das zweite Abstützelement (66) derart ausgebildet ist, daß es sich in dem Topf abstützen kann.

8. Kraftfahrzeug nach Anspruch 7, dadurch gekennzeichnet, daß das erste Abstützelement (64) an dem Querträger (60) und das zweite Abstützelement (66) an der Spritzschutzwand (16) befestigt ist.

9. Kraftfahrzeug nach Anspruch 7 oder 8, dadurch gekennzeichnet, daß das erste Abstützelement (64) und das zweite Abstützelement (66) kegelstumpfförmig ausgebildet sind.

10. Kraftfahrzeug nach Anspruch 1 oder 2, dadurch gekennzeichnet, daß die Abstützung (72) aus zwei Abstützelementen (74, 78) gebildet wird, wobei das erste Abstützelement (74) einen Flanschabschnitt (76) aufweist, und wobei das zweite Abstützelement (78) den Flanschabschnitt (76) gehäuseartig allseitig berührungslos umgibt.

11. Kraftfahrzeug nach Anspruch 10, dadurch gekennzeichnet, daß das erste Abstützelement (74) an der Spritzschutzwand (16) und das zweite Abstützelement (78) an dem Querträger (70) befestigt ist.

## Claims

1. A motor vehicle comprising a spray shielding panel (16) arranged below the windshield (18), a crossbeam (22; 38; 48; 60; 70) which is arranged, running substantially horizontally, in front of the spray shielding panel (16) between the A-columns (12, 14), and a support (24; 40; 52; 62; 72) between the crossbeam (22; 38; 48; 60; 70) and the spray shielding panel (16), by means of which the crossbeam (22; 38; 48; 60; 70) is protected against buckling in the event of an impact, characterized in that the support (24; 40; 52; 62; 72) is configured in such a way that, in the mounted state, the crossbeam (22; 38; 48; 60; 70) and the spray shielding panel (16) are not joined to one another in the region of the support (24; 40; 52; 62; 72), and are arranged at a distance of a few millimeters.

2. The motor vehicle of claim 1, characterized in that the distance is approximately 3 to 15 mm, preferably 5 to 10 mm.

3. The motor vehicle of claim 1 or 2, characterized in that the support (24; 40; 52) is constituted from a support element (28; 42; 54) which is attached to the spray shielding panel (16).

4. The motor vehicle of claim 3, characterized in that the support element (28; 42; 52) has a profile which is adapted, on its side (34; 44; 59) facing the crossbeam (22; 38; 48), to the outer contour of the crossbeam (22; 38; 48).

5. The motor vehicle of claim 3 or 4, characterized in that one or more tabs (50) are configured on the crossbeam (48), and the support element (54) has corresponding extensions (56) which engage into the tabs (50) in the event of a deflection of the crossbeam (48).

6. The motor vehicle of claim 1 or 2, characterized in that the support is constituted from a support element which is attached to the crossbeam.

7. The motor vehicle of claim 1 or 2, characterized in that the support (62) is constituted from two support elements (64, 66), the first support element (64) being configured as a pot, and the second support element (66) being configured such that it can support itself in the pot.

8. The motor vehicle of claim 7, characterized in that the first support element (64) is attached to the crossbeam (60), and the second support element (66) to the spray shielding panel (16).

9. The motor vehicle of claim 7 or 8, characterized in that the first support element (64) and the second support element (66) are configured in truncated conical shape.

10. The motor vehicle of claim 1 or 2, characterized in that the support (72) is constituted from two support elements (74, 78), the first support element (74) having a flange section (76), and the second support element (78) surrounding the flange section (76) on all sides in contactless fashion in the manner of a housing.

11. The motor vehicle of claim 10, characterized in that the first support element (74) is attached to the spray shielding panel (16), and the second support element (78) to the crossbeam (70).

## Revendications

1. Véhicule automobile comportant un auvent (16) disposé au-dessous du pare-brise (18) et comportant une traverse (22; 38; 48; 60; 70) qui est disposée sensiblement horizontalement devant l'auvent (16), entre les montants A (12, 14), ainsi qu'un appui (24; 40; 52; 62; 72) entre la traverse (22 ; 38 ; 48 ; 60 ; 70) et l'auvent (16), par lequel la traverse (22 ; 38 ; 48 ; 60 ; 70) est soutenue de manière à ne pas s'infléchir en cas de collision, caractérisé en ce que l'appui (24 ; 40 ; 52 ; 62 ; 72) est conformé de manière que la traverse (22 ; 38 ; 48 ; 60 ; 70) et l'auvent (16) à l'état monté ne soient pas en liaison entre eux dans la zone de l'appui (24 ; 40 ; 52 ; 62 ; 72), et soient disposés à une distance de quelques millimètres.

2. Véhicule automobile selon la revendication 1, caractérisé en ce que la distance considérée est d'environ 3 à 15 mm, de préférence de 5 à 10 mm.

3. Véhicule automobile selon la revendication 1 ou 2, caractérisé en ce que l'appui (24 ; 40 ; 52) est constitué d'un élément d'appui (28 ; 42 ; 54) qui est fixé à l'auvent (16).

4. Véhicule automobile selon la revendication 3, caractérisé en ce que l'élément d'appui (28 ; 32 ; 52) présente un profil qui est adapté au contour extérieur de la traverse (22 ; 38 ; 48), sur son côté (34 ; 44 ; 59) tourné vers la traverse (22 ; 38 ; 48).

5. Véhicule automobile selon la revendication 3 ou 4, caractérisé en ce que sur la traverse (48) sont formées des attaches (50), et en ce que l'élément d'appui (54) présente des prolongements (56) qui s'engagent dans les attaches (50), en cas de déviation de la traverse (48).

6. Véhicule automobile selon la revendication 1 ou 2, caractérisé en ce que l'appui est constitué par un élément d'appui qui est fixé à la traverse.

7. Véhicule automobile selon la revendication 1 ou 2, caractérisé en ce que l'appui (62) est constitué de deux éléments d'appui (64, 66), le premier élément d'appui (64) étant conformé en pot, et le deuxième élément d'appui (66) étant conformé de manière qu'il puisse prendre appui dans le pot.

8. Véhicule automobile selon la revendication 7, caractérisé en ce que le premier élément d'appui (64) est fixé à la traverse (60) et le deuxième élément d'appui (66), à l'auvent (16).

9. Véhicule selon la revendication 7 ou 8, caractérisé en ce que le premier élément d'appui (64) et le deuxième élément d'appui (66) sont de forme tronconique.

10. Véhicule automobile selon la revendication 1 ou 2, caractérisé en ce que l'appui (72) est constitué de deux éléments d'appui (74, 78), le premier élément d'appui (74) présentant une portion de bride (76), et le deuxième élément d'appui (78) entourant la portion de bride (76) de tous côtés, sans contact, à la manière d'un boîtier.

11. Véhicule automobile selon la revendication 10, caractérisé en ce que le premier élément d'appui (74) est fixé à l'auvent (16) et le deuxième élément d'appui (78), à la traverse (70).
